# EUROPEAN PATENT APPLICATION

(11) **EP 2 159 482 A1**
(43) Date of publication of application: **03.03.2010**
(21) Application number: 09166383.1
(22) Date of filing: 24.07.2009
(51) Int. Cl.: F21S 9/02, F21V 23/04, F21S 8/00, H02J 9/02, F21L 4/08, F21L 4/00

(54) **Safety lighting**

(30) Priority: 31.07.2008 GB 0813974
(71) Applicant: Humankind Limited, Lemsford Village, Hertfordshire AL8 7TW (GB)
(72) Inventor: Fisher, Simon, Potton, Bedfordshire SG19 2RU (GB); Dean, Steven, Kimpton, Hertfordshire SG4 8SD (GB); Campion, Glenn, Much Hadham, Hertfordshire SG10 6DF (GB)
(74) Representative: Gillam, Francis Cyril

(57) **Abstract**

A safety lighting arrangement has a plug-in unit (10) for a domestic mains outlet, the unit (10) incorporating a detector for main electricity at the outlet and a signal transmitter controlled by the presence or absence of that mains electricity. A safety light assembly (11) is configured for positioning remotely from the plug-in unit (10) and has a light source (16), an electrical power source (15) for energising the light source and a receiver for signals transmitted from the plug-in unit (10). The supply of electrical power to the light source is under the control of received signals from the plug-in unit.

## Description

This invention relates to a safety lighting arrangement intended for use in a domestic environment, and in particular for use when the mains electricity supply fails.

Emergency lighting equipment is well known and widely used in commercial and industrial premises. A typical emergency lighting unit includes a rechargeable battery and a charging circuit driven by mains electricity supplied to the unit. A lamp, and usually a fluorescent discharge lamp, is mounted within the unit and is energised when a conventional light switch is turned on. Should the mains supply to the unit fail, then the lamp is energised with current from the rechargeable source, irrespective of the setting of the light switch.

Emergency lighting is useful in any environment where the route to an exit is to be illuminated during the hours of darkness or if there is no natural lighting, in the event that the conventional mains electricity lamps should become inoperable, through a failure in the electricity supply. Such a failure could happen in the case of fire leading to the main fuses blowing, so disconnecting the electricity supply from the conventional lamps. Particularly if there is a fire, it can be very important for the exit route from a building to be sufficiently illuminated for people within the building to be able to find their way quickly and easily out of the building. This is of course equally applicable in industrial and commercial premises, as well as to domestic dwellings.

The fitting of emergency lighting equipment in a domestic environment is not particularly easy and certainly not a do-it-yourself job for an average householder. It is necessary to rewire the lighting circuits in order that there is a non-switched supply to the unit in addition to the switched supply, in order to give the required functionality. Moreover, an emergency lighting unit of the kind described is relatively expensive. As a consequence, very few domestic dwellings are provided with any kind of emergency or safety lighting.

It is a principal aim of the present invention to provide a safety lighting arrangement which is relatively cheap, easy to install and yet provide lighting within a particular room or passageway in the event that the mains electricity supply fails, without the complication of the installation of conventional emergency lighting units.

According to this invention, there is provided a safety lighting arrangement comprising a safety light assembly including a light source, an electrical power source for energising the light source and switch means for the supply of power from the electrical power source to the light source. Such a safety lighting arrangement is characterised by the provision of a plug-in unit for a domestic mains outlet, the plug-in unit incorporating a detector for mains electricity present at the outlet and a signal transmitter controlled by the presence or absence of mains electricity at the outlet; and the safety light assembly has a receiver for signals transmitted by the plug-in unit, the switch means for the supply of power to the light source being under the control of received signals from the plug-in unit whereby the safety light assembly may be positioned remotely from the plug-in unit.

According to a second but closely related aspect of this invention there is provided a method of furnishing a safety light arranged to be illuminated when the electrical mains supply fails, comprising the steps of plugging into a domestic mains outlet a plug-in unit incorporating a detector for mains electricity present at the outlet, the plug-in unit transmitting a signal controlled by the presence or absence of mains electricity at the outlet; and
- positioning remotely from the plug-in unit a safety light assembly comprising a light source, an electrical power source and a receiver for signals transmitted from the plug-in unit, in which method the receiver monitors for signals from the plug-in unit and controls the supply of power from the power source to the light dependent upon the received signals from the plug-in unit.

With the safety lighting arrangement of this invention, lighting is provided in the event that the mains electricity supply should fail, but without the need to make any permanent connection or alterations to the wiring within the area being provided with the safety lighting. Thus, the safety lighting is suitable for installation by an average person without any special skills but the lighting still provides illumination at a time when it might be most needed, such as when emergency evacuation of a building is required.

The above is achieved by providing a safety light assembly having a self-contained electrical power source, a light source and a receiver which controls the illumination of the light source by the power source, dependent upon signals received from the plug-in unit, adapted for plugging into a conventional domestic mains outlet. Thus, all that is necessary is to mount the safety light assembly at a suitable location on the ceiling or on a wall to give illumination to the required area and then plug into a mains outlet the plug-in unit. The mounting of the safety light assembly could be by way of adhesives, screws or similar fixings, or in the case of an upstairs area, could be mounted above the ceiling but with a hole cut therethrough for light emanating from the light source.

The plug-in unit preferably includes a power source for powering the transmitter. Depending upon the precise configuration, that power source may comprise either a rechargeable battery or a high capacity capacitor, the plug-in unit then including a charger for the battery or capacitor and operable when mains electricity is present at the outlet. For such an arrangement, the transmitter could be arranged to transmit a signal only when the detector ceases to detect the present of mains electricity at the outlet. In this case, the receiver should control the supply of electricity from the safety light assembly power source such that power is supplied when a signal is detected from the plug-in unit but the supply of power is inhibited so long as no signal from the plug-in unit is detected.

An alternative arrangement would be for the transmitter to transmit a signal so long as the detector detects the presence of mains electricity at the outlet and in this case the transmitter may be powered by the mains electricity supply, so obviating the need for a power source for operating the transmitter in the event that the mains electricity supply fails. In this case, the receiver should control the supply of electricity from the safety light assembly power source such that power is supplied when no signal is detected but the supply of power is inhibited so long as a signal from the plug-in unit is detected.

The signal transmitted from the plug-in unit to the safety light assembly may be any one of a radio frequency signal, an infrared, ultra violet or visible light signal, or even an ultra sound signal, though an infrared signal is preferred since that is easy to control and requires relatively low powers both for transmission and detection. Moreover such a signal may be modulated with a unique code and the receiver is tuned to that code such that the receiver will control the supply of electricity to the light source only under the action of an appropriately-coded received signal from the associated plug-in unit.

It is highly preferred that the light source of the safety light assembly comprises one or more light emitting diodes. Modern semi-conductor devices of this kind are able to provide high levels of illumination of white light even though consuming relatively low powers. As such, the use of LEDs with a non-rechargeable power source such as dry batteries becomes entirely feasible, the power source giving perhaps several hours use from a set of batteries before those are exhausted.

In a preferred arrangement, the safety light assembly has the light source connected to the power source by a flexible electrical cable so that the light source may be mounted at some distance from the power source. For example, the light source may be secured to a ceiling by an adhesive and a flexible cable interconnects the light source and the power source which may be located above the ceiling and connected to the light source by the cable passing through a small hole formed in the ceiling. In the alternative, the light source may be fitted into a hole formed in the ceiling with the flexible cable interconnecting the light source and the power source, above the ceiling.

In either of the above cases, the receiver may be provided within the light source, for receiving signals from the plug-in unit. A solid state switch associated with the receiver may be located in the light source or in the power source and in the latter case, the switch should be controlled by the receiver supplying the appropriate control signal along the flexible cable.

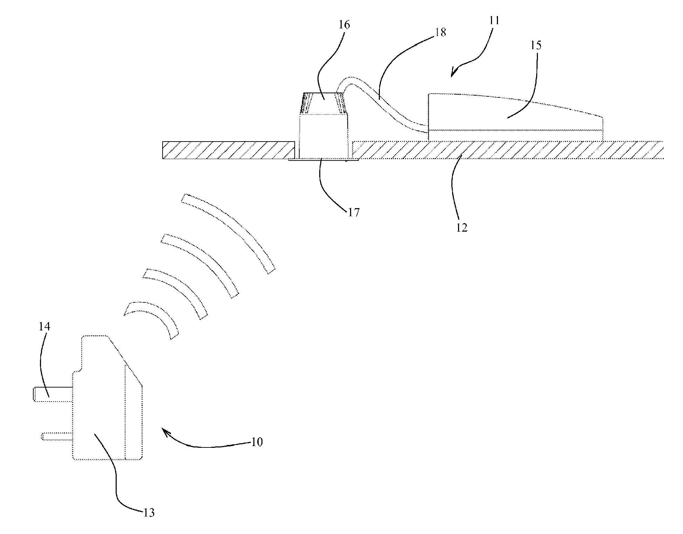

By way of example only, one specific embodiment of safety lighting assembly of this invention will now be described in detail, reference being made to the accompanying drawing which diagrammatically illustrates the overall assembly of the embodiment.

There is shown in the drawing a safety lighting arrangement comprising a plug-in unit 10 intended for plugging into a conventional domestic mains electricity outlet and a safety light assembly 11 intended for mounting on the ceiling 12 of a room or passageway in a domestic dwelling. The plug-in unit 10 has a housing 13 from which project three pins 14 for connecting with a conventional domestic 13A mains outlet. Within the housing there is provided a rechargeable power source (not shown) together with a charger (also not shown) for that power source such that so long as the plug-in unit is connected to a live outlet, the rechargeable power source will be maintained fully charged. Further, within the housing there is also provided an infrared transmitter (not shown) and a detector for mains electricity present at the outlet into which the unit is plugged. The unit is arranged such that in the event the mains electricity supply at the outlet fails, the infrared transmitter is energised by the charged power source in order to transmit a coded infrared signal.

The safety light assembly 11 comprises a box 15 containing conventional long-life alkaline dry cells to serve as a power source, and a separate light unit 16 having a plurality of LEDs arranged to direct light out of a transparent end face 17 of the light unit, the power source within the box 15 being connected to the light unit 16 by a cable 18. Also provided within the light unit 6 is a receiver (not shown) for signals from the plug-in unit 10 and a solid state switch for controlling the supply of power from the power source to the light unit 16.

The light unit 16 is attached to the ceiling by drilling a relatively small diameter hole (typically 30mm to 60mm) through the ceiling board and then press-fitting the light unit into that hole. Automatically-operating spring clips may be associated with the light unit in order to assist the retention of the light unit in the drilled hole. The box 15 may simply be laid on the upper surface of the ceiling board 12 or may be secured in position for example by means of an adhesive, double-sided adhesive tape or the like.

The arrangement of the receiver within the light unit 16 is such that a solid state switch associated with the power source is normally open such that no electricity is supplied from the power source to the LEDs. Should the mains electricity supply fail, that will be detected by the plug-in unit which then starts to transmit a coded signal to the receiver of the light unit 16. On detection of the correctly coded signal, the switch of the safety light assembly is closed so as then to energise the LEDs within the light unit 16, to provide safety lighting.

It will be appreciated that more than one light unit may be connected to the box 15 such that light units may be distributed for example along a corridor or stairway to provide safety lighting in the event of mains electricity failure. Only one plug-in unit need be provided and only one box 15, but the volume of the box may be increased in order to accommodate more dry cells or cells of a greater power capacity. In such an arrangement, the solid state switch should be incorporated within the box 15 to allow simultaneous switching of all of the connected light units.

## Claims

1. A safety lighting arrangement comprising a safety light assembly (11) including a light source, an electrical power source (15) for energising the light source (16) and switch means for the supply of power from the electrical power source to the light source;
**characterised in that** there is provided a plug-in unit (10) for a domestic mains outlet, the plug-in unit incorporating a detector for mains electricity present at the outlet and a signal transmitter controlled by the presence or absence of mains electricity at the outlet; and the safety light assembly (11) has a receiver for signals transmitted by the plug-in unit, the switch means for the supply of power to the light source (16) being under the control of received signals from the plug-in unit (10) whereby the safety light assembly may be positioned remotely from the plug-in unit.

2. A safety lighting arrangement as claimed in claim 1, wherein the plug-in unit (10) includes a power source for powering the transmitter.

3. A safety lighting arrangement as claimed in claim 2, wherein said power source comprises one of a rechargeable battery and a high-capacity capacitor, and the plug-in unit (10) includes a charger for the battery or capacitor operable when mains electricity is present at the outlet.

4. A safety lighting arrangement as claimed in claim 2 or claim 3, wherein the transmitter is arranged to transmit a signal only when the detector ceases to detect the presence of mains electricity at the outlet.

5. A safety lighting arrangement as claimed in claim 2, wherein the transmitter is arranged to transmit a signal whenever the detector detects the presence of mains electricity at the outlet.

6. A safety lighting arrangement as claimed in any of the preceding claims, wherein the transmitter is arranged to transmit one of a radio frequency signal, an infra-red, ultra violet or visible light signal, or an ultra-sound signal.

7. A safety lighting arrangement as claimed in any of the preceding claims, wherein the electrical power source for the safety light assembly (11) comprises a battery pack.

8. A safety lighting arrangement as claimed in any of the preceding claims, wherein the safety light assembly (11) includes a switch controlled by the receiver and arranged to control the supply of power to the light source.

9. A safety lighting arrangement as claimed in any of the preceding claims, wherein the light source (16) comprises at least one light emitting diode.

10. A safety lighting arrangement as claimed in any of the preceding claims, wherein the light source (16) comprises an assembly of light emitting diodes arranged for simultaneous illumination.

11. A safety lighting arrangement as claimed in any of the preceding claims, wherein the light source (16) is connected to the power source (15) by a flexible electrical cable so that the power source may be mounted at a distance from the light source (16).

12. A method of furnishing a safety light to be illuminated when the electrical mains supply fails, comprising the steps of plugging into a domestic mains outlet a plug-in unit (10) incorporating a detector for mains electricity present at the outlet, the plug-in unit being arranged to transmit a signal under the control of the presence or absence of mains electricity at the outlet; and
- positioning remotely from the plug-in unit (10) a safety light assembly (11) comprising a light source (16), an electrical power source (15) and a receiver for signals transmitted from the plug-in unit, in which method the receiver monitors for signals from the plug-in unit (10) and controls the supply of power from the power source (15) to the light source (16) dependent upon the received signals from the plug-in unit.
